# EUROPEAN PATENT APPLICATION

(11) **EP 4 568 028 A1**
(43) Date of publication of application: **11.06.2025**
(21) Application number: 23868134.0
(22) Date of filing: 14.09.2023
(51) Int. Cl.: H01R 39/39, H02K 5/14, H02K 13/00

(54) **BRUSH UNIT AND CONNECTION DEVICE**

(30) Priority: 22.09.2022 JP 2022151603
(71) Applicant: NSK LTD., Tokyo 141-8560 (JP)
(72) Inventor: YAMAGISHI, Takato, Fujisawa-shi, Kanagawa 251-8501 (JP); OKAMOTO, Akinori, Fujisawa-shi, Kanagawa 251-8501 (JP); ISHIBASHI, Yutaka, Fujisawa-shi, Kanagawa 251-8501 (JP)
(74) Representative: Grünecker Patent- und Rechtsanwälte PartG mbB
(86) International application number: PCT/JP2023/033600
(87) International publication number: WO 2024/063013

(57) **Abstract**

A brush unit is attached to a conductor, and abuts on a shaft conductive part provided on a rotary shaft to electrically connect the conductor and the shaft conductive part. The brush unit includes a concave-shaped holder, a brush abutting on the shaft conductive part via an opening part of the holder, and a biasing part that biases the brush. The brush has a first brush part and a second brush part having a larger outer shape than the first brush part. A projecting part of the holder is opposed to a surface of the second brush part to which the first brush part is connected in a biasing direction of the biasing part.

## Description

### Technical Field

The present disclosure relates to a brush unit of a connection device that electrically connects a rotary shaft and a conductor, and a connection device.

### Background Art

There is a case where a rotary shaft driven by an electric motor is electrically charged. When electric charge charged on the rotary shaft flows as a current through a bearing that supports the rotary shaft, electronic corrosion sometimes occurs in the bearing. For example, a configuration for preventing a current from flowing through a bearing is recited in Patent Literature 1. Patent Literature 1 recites that a brush unit is brought to abut on an end portion of a rotary shaft to cause a flow of an electric charge charged on the rotary shaft to a conductor such as a housing via the brush unit.

### Citation List

### Patent Literature

Patent Literature 1: Japanese Patent No. 6242566

### Summary of Invention

### Technical Problem

Patent Literature 1 fails to recite details of the configuration for causing a current to flow from the rotary shaft to the conductor. For this reason, the present technical field demands a brush unit enabling improvement of assemblability to a conductor while securing conductivity with a simple configuration, and a connection device including the brush unit.

### Solution to Problem

A brush unit according to one aspect of the present disclosure is [1] "a brush unit attached to a conductor and abutting on a shaft conductive part provided on a rotary shaft to electrically connect the conductor and the shaft conductive part, the brush unit including: a holder of a concave shape attached to the conductor, having conductivity, and having an opening part provided on a side of the shaft conductive part; a brush accommodated in the holder, abutting on the shaft conductive part via the opening part, and having conductivity; and a biasing part having conductivity, arranged between a bottom in the holder and the brush, and biasing the brush toward a side of the opening part, in which the brush includes: a first brush part having an abutting surface abutting on the shaft conductive part; and a second brush part having one end portion connected to the first brush part and the other end portion biased by the biasing part, the second brush part having an outer shape larger than an outer shape of the first brush part in a direction orthogonal to a biasing direction of the biasing part, and the holder includes a projecting part projecting inward from the opening part, the projecting part being opposed to a surface of the second brush part to which the first brush part is connected in the biasing direction of the biasing part".

In this brush unit, the holder attached to the conductor and the brush abutting on the shaft conductive part attached to the rotary shaft are electrically connected to each other directly and/or via the biasing part. By attaching the holder to the conductor, the brush unit can electrically connect the conductor and the shaft conductive part of the rotary shaft to each other with a simple configuration. In addition, the holder is provided with the projecting part. As a result, the brush unit can prevent the brush from jumping out from the opening part of the holder, and can be easily assembled to the conductor. Thus, the brush unit is allowed to have improved assemblability to the conductor while securing conductivity with a simple configuration.

The brush unit according to one aspect of the present disclosure may be [2] "the brush unit according to the above [1], in which the biasing part is a spring of a coil shape, and at the bottom of the holder, a protrusion to which an end portion of the spring is fitted on an outer side is provided". In this case, the brush unit can hold the coil-shaped spring from the inside by the protrusion provided at the bottom of the holder. This enables the brush unit to have improved assemblability.

The brush unit according to one aspect of the present disclosure may be [3] "the brush unit according to the above [1], in which the biasing part is a spring of a coil shape, an outer diameter of the spring, in the direction orthogonal to the biasing direction of the biasing part, is smaller than an outer shape of the second brush part, the holder has a spring surrounding part surrounding an outer peripheral part of the spring, and an inner dimension of the spring surrounding part in the direction orthogonal to the biasing direction of the biasing part is smaller than an inner dimension of a part surrounding the second brush part in the holder". In this case, the brush unit can hold the coiled-shaped spring from the outside by the spring surrounding part. This enables the brush unit to have improved assemblability.

The brush unit according to one aspect of the present disclosure may be [4] "the brush unit according to any one of the above [1] to [3], further including: an electrode arranged at the bottom of the holder of a concave shape; and a wiring electrically connecting the electrode and the brush, in which the biasing part is arranged between the electrode and the brush". In this case, the electrode is pressed against the bottom of the holder by the biasing part. In addition, the electrode is electrically connected to the brush via the wiring. This improves conductivity between the brush and the holder. Accordingly, the brush unit is allowed to ensure high conductivity with a simple configuration.

A connection device according to another aspect of the present disclosure is [5] "a connection device electrically connecting a rotary shaft and a conductor, the connection device including: a shaft conductive part having a recess, attached to an end portion of the rotary shaft such that an opening part of the recess faces outward, and having conductivity; and the brush unit according to any one of the above [1] to [4], the brush unit having one end portion inserted into the recess of the shaft conductive part to abut on a bottom of the recess, and the other end portion attached to the conductor to electrically connect the shaft conductive part and the conductor".

The connection device includes the above-described brush unit. Therefore, the connection device is allowed to have improved assemblability to the conductor while securing conductivity with the above-described simple configuration.

### Advantageous Effects of Invention

According to the present disclosure, it is possible to improve assemblability to a conductor while securing conductivity with a simple configuration.

### Brief Description of Drawings

FIG.1 is a cross-sectional view around a rotary shaft to which a connection device according to a first embodiment is attached.
FIG.2 is an exploded perspective view of the connection device in FIG.1.
FIG.3(a) is an enlarged cross-sectional view of a brush unit in FIG.1. FIG.3(b) is an enlarged cross-sectional view illustrating a state before processing of a holder of the brush unit.
FIG.4 is an enlarged cross-sectional view of a brush unit according to a first modification.
FIG.5 is a cross-sectional view illustrating another form of a protrusion according to the first modification.
FIG.6(a) is a cross-sectional view illustrating still another form of the protrusion according to the first modification. FIG.6(b) is a cross-sectional view taken along line VIb-VIb of FIG.6(a).
FIG.7 is an enlarged cross-sectional view of a brush unit according to a second modification.
FIG.8 is an exploded perspective view of a connection device including a shaft conductive part according to a modification.
FIG.9 is an enlarged cross-sectional view of a connection device according to a second embodiment.
FIG.10 is an enlarged cross-sectional view illustrating a connection device according to a modification of the second embodiment.

### Description of Embodiments

In the following, embodiments of the present disclosure will be described with reference to the drawings. Note that the same or corresponding elements in the drawings are denoted by the same reference signs to omit redundant description thereof.

### (First Embodiment of Connection Device)

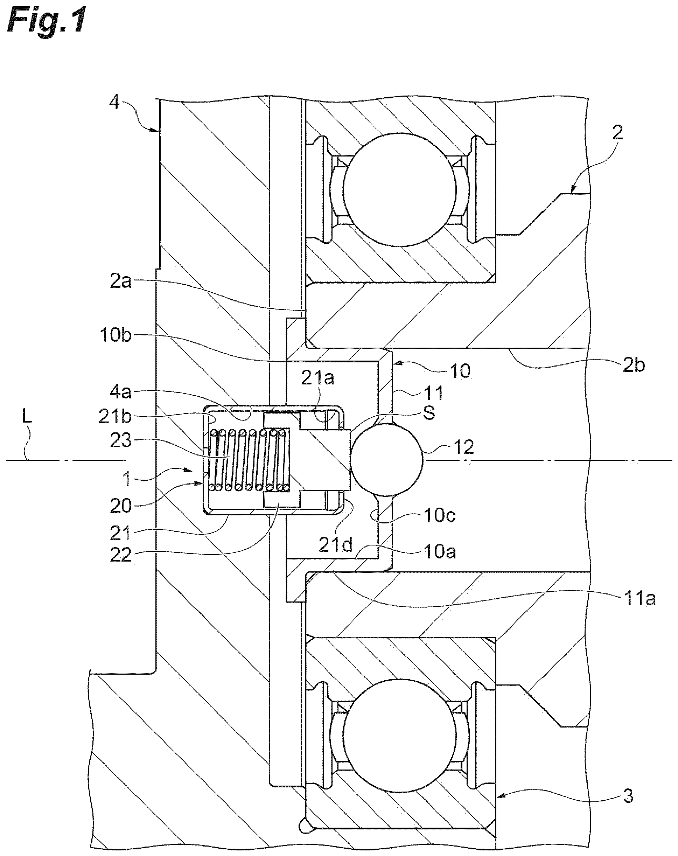

A first embodiment of a connection device will be described. As illustrated in FIG.1, a connection device 1 according to the first embodiment electrically connects a rotary shaft 2 rotatably supported by a bearing 3 with a housing (conductor) 4. The rotary shaft 2 may be a shaft of an electric motor or a shaft coupled to the shaft of the electric motor via a gear. In the present embodiment, a part on an end portion 2a side of the rotary shaft 2 is a hollow shaft (hollow structure). Note that the entire rotary shaft 2 may be a hollow shaft as well as the end portion 2a of the rotary shaft 2. The bearing 3 supports the rotary shaft 2 so as to be rotatable about a rotation axis L. A type of the bearing 3 is not particularly limited as long as the rotary shaft 2 can be rotatably supported.

The housing 4 accommodates the connection device 1, the rotary shaft 2, the bearing 3, and the like. The housing 4 has conductivity. In the present embodiment, the connection device 1 electrically connects the rotary shaft 2 and the housing 4 to form a conductive path having a lower resistance value than that of a conductive path from the rotary shaft 2 to the housing 4 via the bearing 3.

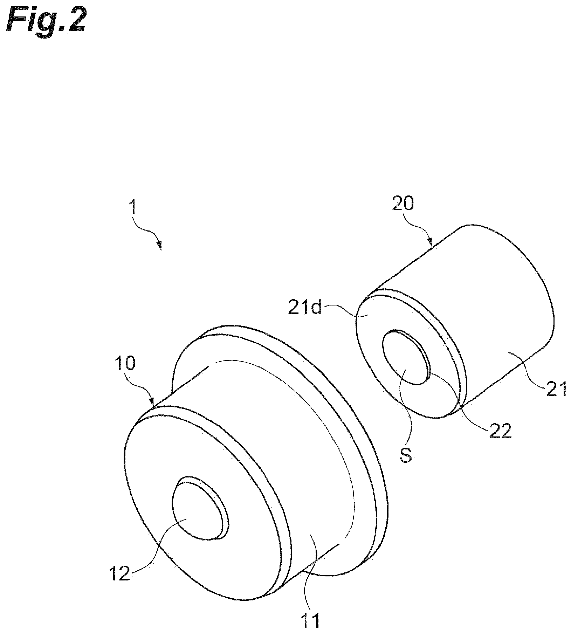

As illustrated in FIGS. 1 and 2, the connection device 1 includes a shaft conductive part 10 and a brush unit 20. The shaft conductive part 10 has conductivity. In addition, the shaft conductive part 10 has a shape having a recess 10a. The shaft conductive part 10 is attached to the end portion 2a of the rotary shaft 2 such that an opening part 10b of the recess 10a faces outward.

In more detail, the shaft conductive part 10 includes a ball holder 11 and a steel ball 12. The ball holder 11 and the steel ball 12 each have conductivity. The ball holder 11 has a shape having the recess 10a. As an example, the ball holder 11 is formed by pressing a steel plate.

The steel ball 12 may be, for example, a ball for use for a bearing. The steel ball 12 is attached to a bottom 10c of the recess 10a of the ball holder 11. Here, as an example, the steel ball 12 is fitted into a hole provided in the bottom 10c of the recess 10a of the ball holder 11 and is fixed by caulking. Thus, the steel ball 12 is provided at the bottom 10c of the recess 10a in the shaft conductive part 10, and configures an abutting part that has a protrusion shape and abuts on the brush unit 20 (an end surface S of a brush 22). The steel ball 12 is attached to the ball holder 11 such that a center of the steel ball 12 is located on the rotation axis L, which is a rotation center of the rotary shaft 2.

An outer peripheral surface of the ball holder 11 is provided with a fitting part 11a fitted in and fixed to an inner peripheral surface 2b of the end portion 2a of the rotary shaft 2. The ball holder 11 is fitted in and fixed to the inner peripheral surface 2b of the end portion 2a of the rotary shaft 2 such that the opening part 10b of the recess 10a faces outward. The fitting part 11a of the ball holder 11 and the inner peripheral surface 2b of the rotary shaft 2 are engaged with each other. Therefore, the ball holder 11 rotates integrally with the rotary shaft 2. The steel ball 12 abuts on one end portion (the end surface S of the brush 22) of the brush unit 20 in the recess 10a of the ball holder 11.

The one end portion of the brush unit 20 is inserted into the recess 10a of the shaft conductive part 10 to abut on the steel ball 12 provided at the bottom 10c of the recess 10a. The other end portion of the brush unit 20 is attached to the housing 4. The brush unit 20 electrically connects the shaft conductive part 10 attached to the rotary shaft 2 and the housing 4. In more detail, the brush unit 20 includes a holder 21, the brush 22, and a spring (biasing part) 23.

The holder 21 has a concave shape provided with an opening part 21a. The holder 21 has conductivity. As a material of the holder 21, for example, metal (steel) having conductivity can be used. An end portion of the holder 21 on the side where the opening part 21a is provided is inserted into the recess 10a of the shaft conductive part 10. The other end portion of the holder 21 is attached to the housing 4. In the present embodiment, the housing 4 has a recess 4a on the rotation axis L serving as the rotation center of the rotary shaft 2. The holder 21 is attached to the housing 4 with the other end portion being inserted into the recess 4a. As a result, the housing 4 and the holder 21 are electrically connected to each other.

The brush 22 is arranged in the holder 21. The brush 22 has conductivity. The brush 22 is slidable along the rotation axis L in the holder 21. As the brush 22, for example, a carbon brush can be used. In the brush 22, the end surface S on the bottom 10c side (the steel ball 12 side) of the recess 10a of the shaft conductive part 10 abuts on the steel ball 12. In other words, the end surface S is an abutting surface that abuts on the steel ball 12. A shape of the end surface S may be flat, a concave shape (as an example, a shape recessed in an arc shape), or a protrusion shape (as an example, a shape protruding in an arc shape). In the present embodiment, the end surface S need only be in point contact with the steel ball 12.

Note that the steel ball 12 is provided such that the center of the steel ball 12 is located on the rotation axis L as described above. Therefore, the end surface S of the brush 22 and the steel ball 12 are in point contact with each other on the rotation axis L. As a result, even when the shaft conductive part 10 rotates together with the rotary shaft 2, a position of a contact point between the end surface S of the brush 22 and the steel ball 12 is not deviated. In other words, a difference in peripheral speed between the end surface S and the steel ball 12 is zero at a connection part between them.

The spring 23 is arranged between a bottom 21b of the holder 21 and the brush 22. The spring 23 has conductivity. The spring 23 is a coil-shaped compression spring. The spring 23 urges the brush 22 toward the opening part 21a of the holder 21. In other words, the spring 23 biases the brush 22 in a direction in which the brush 22 approaches the steel ball 12. As a result, the brush 22 is brought into point contact with the steel ball 12 in a state where the connection device 1 is attached. In other words, the brush 22 and the steel ball 12 are electrically connected.

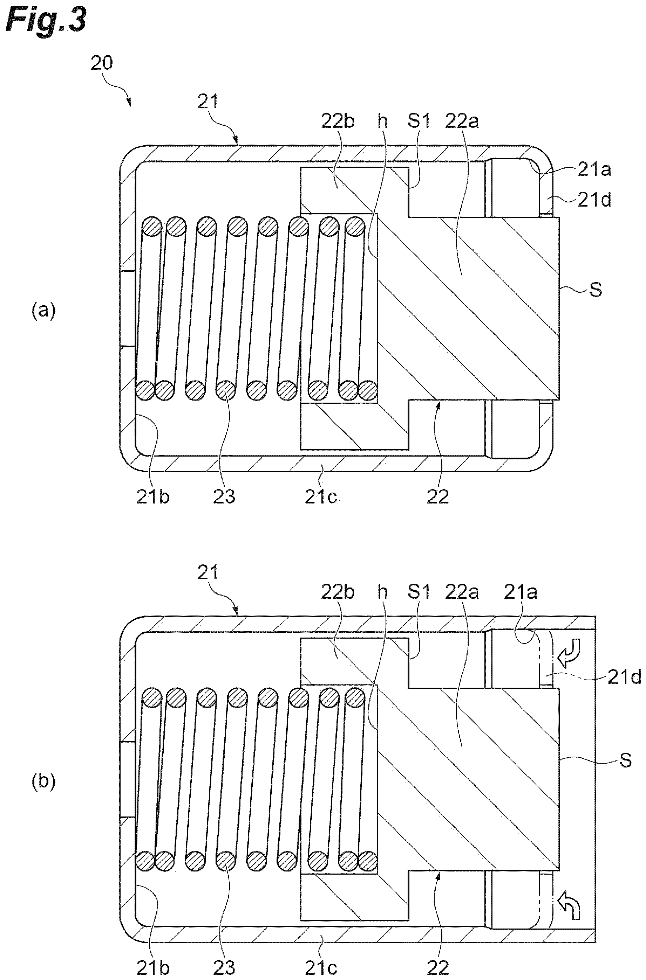

Here, as illustrated in FIG.3(a), the brush 22 has a first brush part 22a and a second brush part 22b. The first brush part 22a has the end surface S abutting on the steel ball 12 at an end portion on a side where the brush unit 20 is inserted into the recess 10a of the shaft conductive part 10. In the present embodiment, the first brush part 22a has a columnar shape with the rotation axis L as an axis.

The second brush part 22b is connected to the first brush part 22a. The second brush part 22b is located closer to the bottom 21b of the holder 21 than the first brush part 22a. The spring 23 is arranged between the second brush part 22b and the bottom 21b of the holder 21. In other words, the second brush part 22b has one end connected to the first brush part 22a and the other end portion biased by the spring 23. The second brush part 22b has a recess h on a surface opposed to the bottom 21b of the holder 21. An end portion of the spring 23 is fitted into the recess h. As a result, deviation of the position of the spring 23 with respect to the brush 22 is suppressed.

The second brush part 22b has a larger outer shape than the first brush part 22a in a direction (direction orthogonal to the rotation axis L) orthogonal to a biasing direction (direction along the rotation axis L) of the spring 23. Note that, for example, the fact that the outer shape of the second brush part 22b is larger than the outer shape of the first brush part 22a means that the first brush part 22a is located inside an outer edge of the second brush part 22b when viewed along an alignment direction of the second brush part 22b and the first brush part 22a. In the present embodiment, the second brush part 22b has a columnar shape with the rotation axis L as an axis. Therefore, in the present embodiment, the second brush part 22b has an outer diameter larger than an outer diameter of the first brush part 22a.

The holder 21 has a cylindrical part 21c extending along the rotation axis L. The brush 22 is held by the holder 21 while having a moving direction restricted by abutting of an outer peripheral surface of the second brush part 22b on an inner peripheral surface of the cylindrical part 21c of the holder 21 so as to be slidable.

In addition, the holder 21 has a projecting part 21d that projects inward from the opening part 21a. In other words, the projecting part 21d projects inward from an end portion of the cylindrical part 21c. A distal end portion of the projecting part 21d is opposed to an outer peripheral surface of the first brush part 22a. Here, in the second brush part 22b, a surface to which the first brush part 22a is connected is referred to as a connection surface (surface) S1. In other words, the connection surface S1 is a surface of the second brush part 22b facing the opening part 21a side. The projecting part 21d is opposed to the connection surface S1 in the biasing direction (direction along the rotation axis L) of the spring 23. In this state, the connection surface S1 of the second brush part 22b is caught by the projecting part 21d, thereby preventing the brush 22 from falling off from the holder 21.

As illustrated in FIG. 3(b), the projecting part 21d may be formed by bending (e.g., hot curling) the end portion of the cylindrical part 21c of the holder 21. In other words, the holder 21, the brush 22, and the spring 23 are integrated with each other by forming the projecting part 21d by bending in a state where the spring 23 and the brush 22 are accommodated in the holder 21. This prevents the brush 22 from falling off from the holder 21 in a state where the steel ball 12 is not abutting on the brush 22 (e.g., a state at the time of assembling the brush unit 20 to the housing 4, a state before assembling the brush unit 20, and the like).

In the present embodiment, the projecting part 21d extends over an entire circumferential area of the end portion of the cylindrical part 21c. In other words, the projecting part 21d has an annular shape. Not limited thereto, one or a plurality of the projecting parts 21d may be provided intermittently along the circumferential direction of the end portion (opening part 21a) of the cylindrical part 21c.

Next, a conductive path between the rotary shaft 2 and the housing 4 in a case where the connection device 1 is used will be described. In the present embodiment, the ball holder 11, the steel ball 12, the holder 21, the brush 22, and the spring 23 have conductivity. Therefore, the rotary shaft 2 is electrically connected to the housing 4 via the ball holder 11, the steel ball 12, the brush 22, the spring 23, and the holder 21. In other words, the ball holder 11, the steel ball 12, the brush 22, the spring 23, and the holder 21 form a conductive path electrically connecting the rotary shaft 2 and the housing 4. Furthermore, the rotary shaft 2 is electrically connected to the housing 4 also via the ball holder 11, the steel ball 12, the brush 22, and the holder 21. In other words, the brush 22 and the holder 21 are electrically directly connected to each other without via the spring 23. Thus, the ball holder 11, the steel ball 12, the brush 22, and the holder 21 form a conductive path electrically connecting the rotary shaft 2 and the housing 4. As a result, the rotary shaft 2 and the housing 4 are electrically connected to each other even when the rotary shaft 2 is in a rotating state.

As described in the foregoing, in this brush unit 20, the holder 21 attached to the housing 4 and the brush 22 abutting on the shaft conductive part 10 attached to the rotary shaft 2 are electrically connected to each other directly and/or via the spring 23. Since the holder 21 is attached to the recess 4a of the housing 4, the brush unit 20 can electrically connect the shaft conductive part 10 attached to the rotary shaft 2 and the housing 4 to each other with a simple configuration. In addition, the holder 21 is provided with the projecting part 21d. As a result, the brush unit 20 can prevent the brush 22 from jumping out (coming off) from the opening part 21a of the holder 21, and can be easily assembled to the housing 4. Thus, the brush unit 20 and the connection device 1 including the brush unit 20 enable improvement of assemblability to the housing 4 while ensuring conductivity with a simple configuration.

### (First Modification)

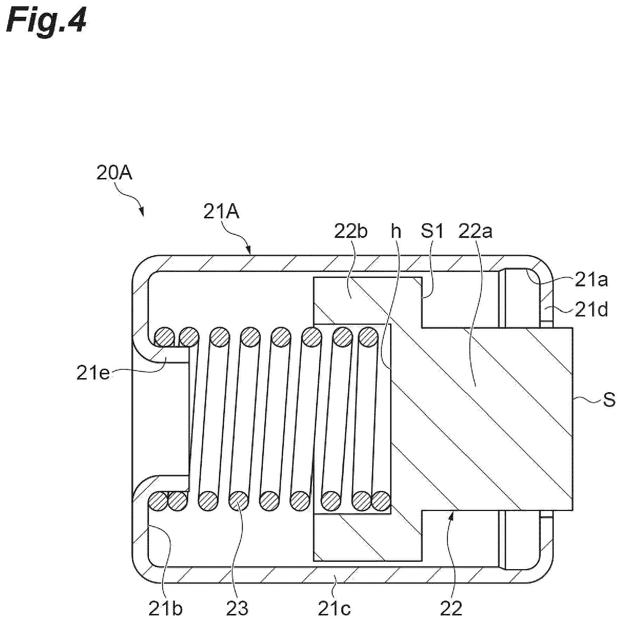

Next, a first modification of the brush unit will be described. As illustrated in FIG.4, a brush unit 20A according to the first modification includes a holder 21A having a different shape instead of the holder 21 according to the first embodiment. A protrusion 21e protruding toward an opening part 21a is provided at a bottom 21b in the holder 21A. An end portion of a spring 23 is fitted to the outside of the protrusion 21e. In the present modification, the protrusion 21e has a cylindrical shape. Here, the protrusion 21e abuts on an inner peripheral surface circumference of the coil-shaped spring 23 and holds the spring 23.

In this case, the brush unit 20A can hold the coil-shaped spring 23 from the inside by the protrusion 21e provided at the bottom 21b of the holder 21A. This enables the brush unit 20A and a connection device including the brush unit 20A to have improved assemblability of the brush unit 20A.

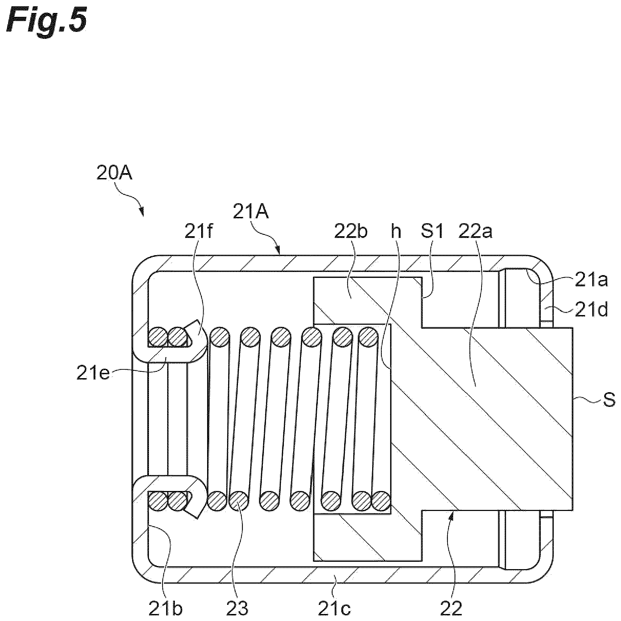

Note that the protrusion 21e is not limited to have a cylindrical shape. For example, as illustrated in FIG.5, the protrusion 21e may have a projecting part 21f that projects outward at a distal end portion of the protrusion 21e. The spring 23 may be hooked on the projecting part 21f. In this case, the holder 21A of the brush unit 20A can more firmly hold the spring 23 by the protrusion 21e and the projecting part 21f.

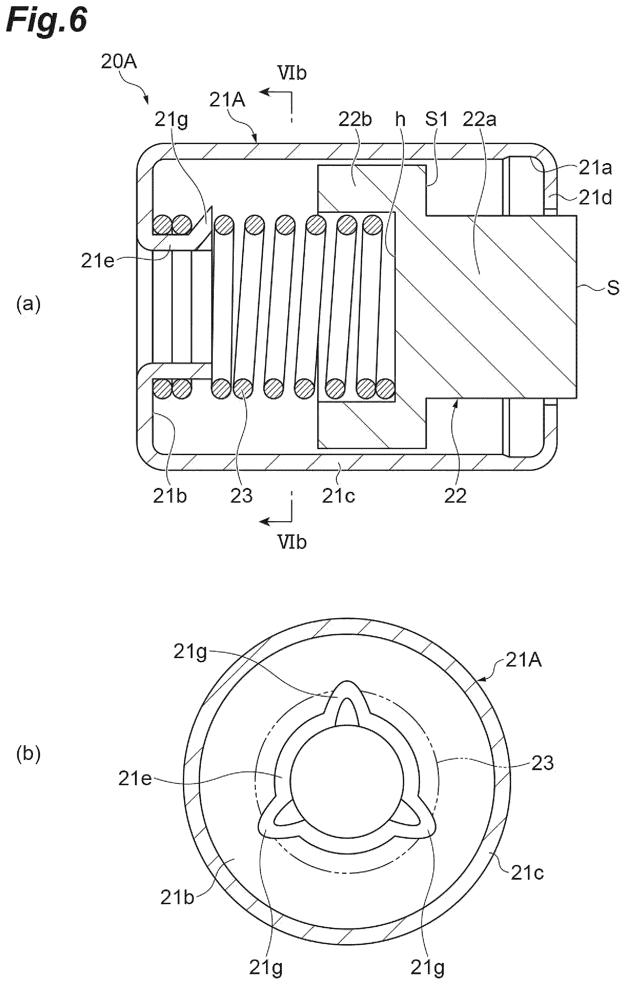

Furthermore, as illustrated in FIGS. 6(a) and 6(b), the protrusion 21e may be provided with a plurality of projecting parts 21g protruding outward at the distal end portion of the protrusion 21e. In the example shown in FIGS. 6(a) and 6(b), as an example, three projecting parts 21g are provided at equal intervals along a circumferential direction of the protrusion 21e. Note that in FIG.6(b), the spring 23 is indicated by an imaginary line to indicate the projecting part 21g. The projecting part 21g may be formed, for example, by pushing out the end portion of the protrusion 21e toward the outside. The projecting part 21g may be a staking tab. The spring 23 is hooked on the plurality of projecting parts 21g. In other words, the projecting part 21g holds the spring 23. In this case, the holder 21A of the brush unit 20A can more firmly hold the spring 23 by the protrusion 21e and the projecting part 21g.

### (Second Modification)

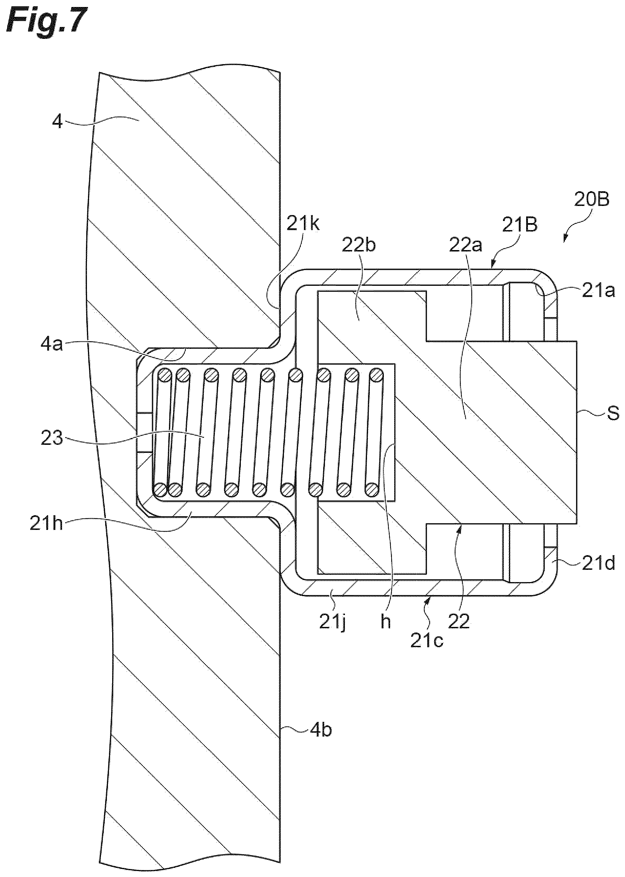

Next, a second modification of the brush unit will be described. As illustrated in FIG.7, a brush unit 20B according to the second modification includes a holder 21B having a different shape instead of the holder 21 according to the first embodiment. In a direction orthogonal to a biasing direction of a spring 23, an outer diameter of the coil-shaped spring 23 is smaller than an outer shape (outer diameter) of a second brush part 22b of the brush 22. The holder 21B has a spring surrounding part 21h that surrounds an outer peripheral part of the spring 23, and a second brush surrounding part 21j that surrounds the second brush part 22b. In the present modification, each of the spring surrounding part 21h and the second brush surrounding part 21j has a cylindrical shape.

In the direction orthogonal to the biasing direction of the spring 23, an inner dimension (inner diameter) of the spring surrounding part 21h is smaller than an inner dimension (inner diameter) of the second brush surrounding part 21j. The inner diameter of the spring surrounding part 21h is preferably large enough to surround (hold) the spring 23 accommodated inside while suppressing rattling.

As described above, the spring surrounding part 21h and the second brush surrounding part 21j are different in size (diameter). Therefore, the spring surrounding part 21h and the second brush surrounding part 21j are coupled to each other by an annular coupling part 21k. The coupling part 21k extends outward from an outer peripheral surface of the spring surrounding part 21h along the direction orthogonal to the biasing direction of the spring 23. In other words, a connection part between the spring surrounding part 21h and the second brush surrounding part 21j is a stepped part.

The brush unit 20B is attached to a housing 4 by fitting the spring surrounding part 21h of the holder 21B into a recess 4a provided in the housing 4. Here, the recess 4a is provided on an inner surface 4b of the housing 4. When the spring surrounding part 21h of the holder 21B is fitted into the recess 4a, the coupling part 21k of the holder 21B is brought to abut on the inner surface 4b of the housing 4. In other words, in a state where the brush unit 20B is attached to the housing 4, the spring surrounding part 21h and the coupling part 21k of the holder 21 are electrically connected to the housing 4.

As described above, in the holder 21B, the inner dimension of the spring surrounding part 21h that surrounds the spring 23 is smaller than the inner dimension of the second brush surrounding part 21j. Therefore, the holder 21B can hold the coil-shaped spring 23 from the outside by the spring surrounding part 21h while suppressing rattling. This enables the brush unit 20B and a connection device including the brush unit 20B to have improved assemblability of the brush unit 20B.

When the brush unit 20B is attached to the housing 4, the spring surrounding part 21h and the coupling part 21k abut on the housing 4. In other words, in the brush unit 20B, in addition to the spring surrounding part 21h fitted into the recess 4a, the coupling part 21k also serves as a conductive path between the holder 21B and the housing 4. Therefore, when the brush unit 20B is attached to the housing 4, the conductive performance between the holder 21B and the housing 4 can be improved.

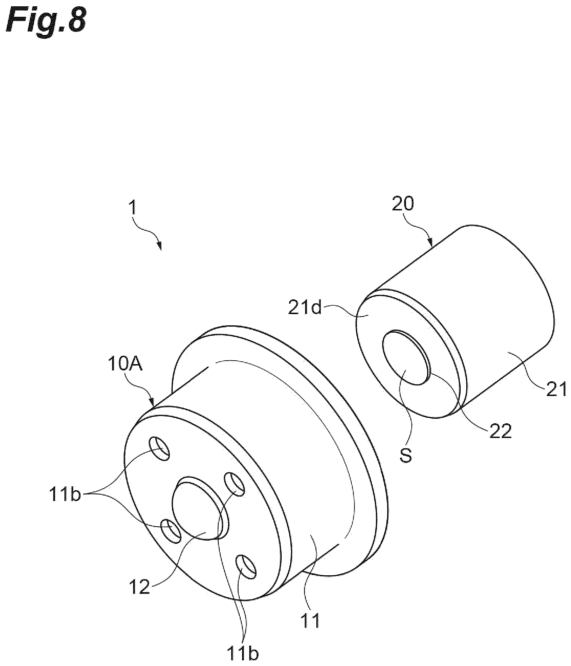

Although the first embodiment of the connection device and the various modifications of the brush unit have been described above, the connection device and the brush unit are not limited to the above embodiment and various modifications. For example, as in a shaft conductive part 10A illustrated in FIG.8, one or a plurality of holes 11b may be provided around a steel ball 12 in a ball holder 11. For example, there is a case where the rotary shaft 2 is a hollow shaft, and a lubricating oil is caused to flow in the rotary shaft 2. Even in such a case, by using the shaft conductive part 10A provided with the hole 11b in the ball holder 11, it is possible to prevent a flow of the lubricating oil in the rotary shaft 2 from being hindered. Note that the shaft conductive part 10A having the hole 11b is not limited to being attached to the rotary shaft 2 through which the lubricating oil is caused to flow, and may be attached to the rotary shaft 2 through which the lubricating oil is not caused to flow.

### (Second Embodiment of Connection Device)

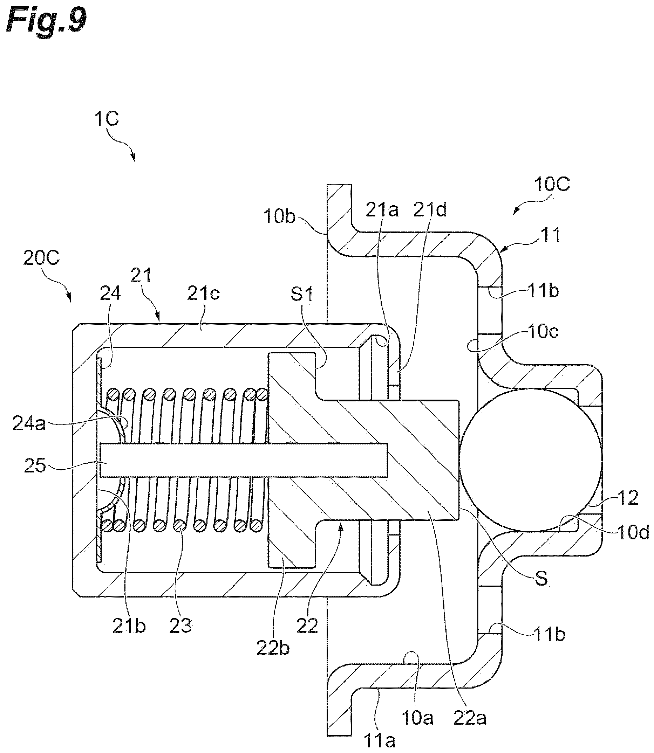

A second embodiment of the connection device will be described. As illustrated in FIG.9, a connection device 1C according to the second embodiment electrically connects a rotary shaft 2 and a housing 4, similarly to the connection device 1 according to the first embodiment. The connection device 1C is configured to further improve conductivity between the rotary shaft 2 and the housing 4. Specifically, the connection device 1C includes a shaft conductive part 10C and a brush unit 20C.

The shaft conductive part 10C includes a ball holder 11C and a steel ball 12. The ball holder 11C has a shape having a recess 10a. An accommodation part 10d is formed at a bottom 10c of the recess 10a of the ball holder 11C. The steel ball 12 is accommodated in the accommodation part 10d. The steel ball 12 may be fixed to the accommodation part 10d by caulking in the accommodation part 10d, or may be accommodated in the accommodation part 10d so as to be movable in and out. Similarly to the shaft conductive part 10A described with reference to FIG.8, one or a plurality of holes 11b are provided in the bottom 10c of the recess 10a of the ball holder 11.

The brush unit 20C includes a holder 21, a brush 22, a spring (biasing part) 23, an electrode 24, and a wiring 25. The electrode 24 has conductivity. The electrode 24 is arranged at a bottom 21b of the holder 21. The electrode 24 has a protrusion 24a that protrudes toward the brush 22 side. The spring 23 is arranged between the electrode 24 and the brush 22. An end portion of the spring 23 is fitted into the outside of the protrusion 24a. The protrusion 24a can position the spring 23. Note that the electrode 24 is pressed against the bottom 21b of the holder 21 by being biased by the spring 23.

One end portion of the wiring 25 is connected to the wiring 25. The other end portion of the wiring 25 is connected to the brush 22. The wiring 25 electrically connects the electrode 24 and the brush 22. The wiring 25 has flexibility, for example. Even when an interval between the electrode 24 and the brush 22 changes, the wiring 25 maintains a state in which the wiring 25 and the brush 22 are electrically connected.

The wiring 25 passes through the inside of the coil-shaped spring 23. In the state where the opposite end portions of the wiring 25 are connected to the electrode 24 and the brush 22, respectively, the brush 22, the spring 23, the electrode 24, and the wiring 25 are integrated with each other. This enables the connection device 1C to have improved assemblability when the brush 22, the spring 23, the electrode 24, and the wiring 25 are assembled to the holder 21.

A projecting part 21d of the holder 21 may be formed by bending similarly to the brush unit 20 described with reference to FIG.3(b).

Next, a conductive path between the rotary shaft 2 and the housing 4 in a case where the connection device 1C is used will be described. In the present embodiment, as in the first embodiment, the rotary shaft 2 is electrically connected to the housing 4 via the ball holder 11, the steel ball 12, the brush 22, and the holder 21.

In addition, the connection device 1C according to the present embodiment includes the electrode 24 and the wiring 25. Therefore, in the present embodiment, the rotary shaft 2 is electrically connected to the housing 4 also via the ball holder 11, the steel ball 12, the brush 22, the wiring 25, the electrode 24, and the holder 21. Thus, in the connection device 1C, the brush 22 and the electrode 24 are connected by the wiring 25. In addition, in the connection device 1C, the electrode 24 is pressed against the bottom 21b of the holder 21 by the spring 23. This enables the connection device 1C to have improved conductivity between the brush 22 and the holder 21.

As described above, the brush unit 20C and the connection device 1C including the brush unit 20C enable improvement of assemblability to the housing 4 while ensuring high conductivity with a simple configuration.

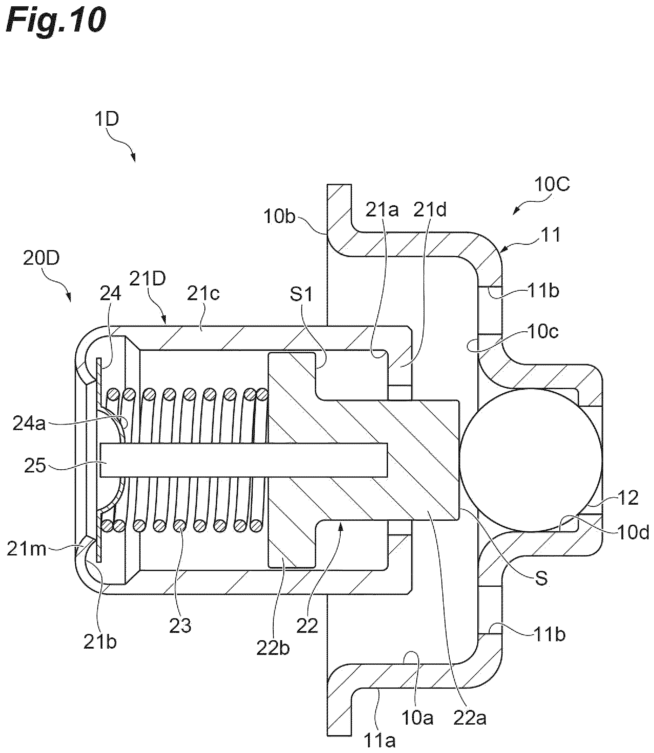

In the connection device 1C according to the second embodiment, the electrode 24 abuts on the bottom 21b of the concave-shaped holder 21. The bottom 21b may be formed by a projecting part that projects from a cylindrical part 21c of the holder 21. Specifically, a brush unit 20D of a connection device 1D illustrated in FIG.10 includes a holder 21D instead of the holder 21 of the brush unit 20 according to the second embodiment.

The holder 21D includes a projecting part 21m that forms a bottom 21b of the concave-shaped holder 21D. The projecting part 21m is provided at an end portion of a cylindrical part 21c on a side opposite to an opening part 21a side. The projecting part 21m projects inward from the end portion of the cylindrical part 21c. The projecting part 21m abuts on an electrode 24. In other words, the electrode 24 is arranged at the bottom 21b of the concave-shaped holder 21D formed by the projecting part 21m.

The projecting part 21m may be formed by bending the end portion of the cylindrical part 21c similarly to the brush unit 20 described with reference to FIG.3(b). In this case, the projecting part 21m is formed by bending in a state where a brush 22, a spring 23, the electrode 24, and a wiring 25 are accommodated in the holder 21D. This enables the connection device 1D to have improved assemblability of the brush unit 20D.

Although the embodiments of the present disclosure have been described in the foregoing, the present disclosure is not limited to the above-described embodiments. For example, the first brush part 22a is not limited to a columnar shape, and may have a quadrangular prism shape. Although the coil-shaped spring 23 is used as the biasing part that biases the brush 22 and the like, a biasing part having another configuration may be used as long as the brush 22 and the like can be biased. The shaft conductive parts 10,10A, and 10C are not limited to include the steel ball 12. The shaft conductive part 10 and the like may be configured to be able to abut on the end surface S of the brush 22 (e.g., configured to have a protrusion). In addition, the present disclosure is not limited to the configuration in which the steel ball 12 is provided in the shaft conductive part 10 or the like. A steel ball may be attached to a distal end portion of the brush 22, and the steel ball may abut on a bottom surface of the recess 10a such as the shaft conductive part 10.

Although the connection device 1, 1C, 1D electrically connects the rotary shaft 2 and the housing 4, a conductor other than the housing 4 may be electrically connected to the rotary shaft 2. The electrode 24 and the wiring 25 described in the second embodiment may be applied to the connection device 1 according to the first embodiment and to the various modifications. In addition, at least a part of the various embodiments and various modifications described above may be freely and selectively combined with each other.

### Reference Signs List

1, 1C, 1D connection device
2 rotary shaft
4 housing (conductor)
10, 10A, 10C shaft conductive part
20, 20A, 20B, 20C, 20D brush unit
21, 21A, 21B, 21D holder
21a opening part
21d projecting part
21e protrusion
21h spring surrounding part
21j second brush surrounding part (part surrounding second brush part)
22 brush
22a first brush part
22b second brush part
23 spring (biasing part)
24 electrode
25 wiring
S end surface (abutting surface)
S1 connection surface (surface of second brush part to which first brush part is connected)

## Claims

1. A brush unit attached to a conductor and abutting on a shaft conductive part provided on a rotary shaft to electrically connect the conductor and the shaft conductive part,
the brush unit comprising:
a holder of a concave shape attached to the conductor, having conductivity, and having an opening part provided on a side of the shaft conductive part;
a brush accommodated in the holder, abutting on the shaft conductive part via the opening part, and having conductivity; and
a biasing part having conductivity, arranged between a bottom in the holder and the brush, and biasing the brush toward a side of the opening part, wherein
the brush includes
a first brush part having an abutting surface abutting on the shaft conductive part, and
a second brush part having one end portion connected to the first brush part and the other end portion biased by the biasing part,
the second brush part having an outer shape larger than an outer shape of the first brush part in a direction orthogonal to a biasing direction of the biasing part,
the holder includes a projecting part projecting inward from the opening part, and
the projecting part being opposed to a surface of the second brush part to which the first brush part is connected in the biasing direction of the biasing part.

2. The brush unit according to claim 1, wherein
the biasing part is a spring of a coil shape, and
at the bottom of the holder, a protrusion to which an end portion of the spring is fitted on an outer side is provided.

3. The brush unit according to claim 1, wherein
the biasing part is a spring of a coil shape,
an outer diameter of the spring, in the direction orthogonal to the biasing direction of the biasing part, is smaller than an outer shape of the second brush part,
the holder has a spring surrounding part surrounding an outer peripheral part of the spring, and
an inner dimension of the spring surrounding part, in the direction orthogonal to the biasing direction of the biasing part, is smaller than an inner dimension of a part surrounding the second brush part in the holder.

4. The brush unit according to claim 1, further comprising:
an electrode arranged at a bottom of the holder of a concave shape; and
a wiring electrically connecting the electrode and the brush, wherein
the biasing part is arranged between the electrode and the brush.

5. A connection device electrically connecting a rotary shaft and a conductor, the connection device comprising:
a shaft conductive part having a recess, attached to an end portion of the rotary shaft such that an opening part of the recess faces outward, and having conductivity; and
the brush unit according to any one of claims 1 to 4, the brush unit having one end portion inserted into the recess of the shaft conductive part to abut on a bottom of the recess, and the other end portion attached to the conductor to electrically connect the shaft conductive part and the conductor.
